# EUROPÄISCHE PATENTANMELDUNG

(11) **EP 1 978 352 A1**
(43) Veröffentlichungstag der Anmeldung: **08.10.2008**
(21) Anmeldenummer: 08103257.5
(22) Anmeldetag: 31.03.2008
(51) Int. Cl.: G01N 21/64, G01N 33/18

(54) **Verfahren zur Bestimmung der Konzentration von in einem Nutzfluidum gelösten Reinigungs- und/oder Desinfektions- und/oder Hilfsstoffen**

(30) Priorität: 04.04.2007 DE 102007016237
(71) Anmelder: Fink Tec GmbH, 59069 Hamm (DE)
(72) Erfinder: Fink, Michael Dr., 59069, Hamm (DE); Taraschkewitz, Rüdiger, 45896, Gelsenkirchen (DE)
(74) Vertreter: Dantz, Jan Henning

(57) **Zusammenfassung**

Ein Verfahren zur Bestimmung der Konzentration von in einem Nutzfluidum gelösten Reinigungs- und/oder Desinfektions- und/oder Hilfsstoffen, die in einem in der Lebensmittel- oder Getränkeverarbeitung eingesetzten Nutzfluidum gelöst sind, ist so ausgebildet, dass dem Stoff vor dem Einbringen in das Fluidum zumindest ein Tracerfarbstoff zugegeben wird, dessen Konzentration während und/oder nach der Nutzung des Nutzfluids ermittelt und ausgewertet wird.

## Beschreibung

Die Erfindung betrifft ein Verfahren zur Bestimmung der Konzentration von in einem Nutzfluidum gelösten Reinigungs- und/oder Desinfektions- und/oder Hilfsstoffen nach dem Oberbegriff des Anspruchs 1.

Zur Reinigung von Aggregaten, Behältern oder Rohrleitungen, in der Lebensmittel- oder Getränkeindustrie kommen Nutzfluide als Reinigungsflüssigkeit zum Einsatz, die vielfach als wässrige Lösung vorliegen, in denen ein zuvor beigemischtes Reinigungskonzentrat gelöst ist.

Gerade in der Lebensmittel- und Getränkeindustrie werden Reinigungs- und Desinfektionsmittellösungen sehr schnell durch abgereinigte Verunreinigungen derart belastet, dass mit herkömmlichen nasschemischen Verfahren eine Konzentrationsbestimmung in wirtschaftlich sinnvoller Weise nicht mehr möglich ist.

Die bislang üblichen gattungsgemäßen Verfahren beinhalten die Reinigung, Auftrennung, ggf. Anreicherung und Einzelnachweis von Verbindungen aus den Reinigungs- und Desinfektionsmitteln. Eine gewünschte zeitnahe Analyse ist mit diesen Verfahren allerdings nicht möglich.

Zusätzlich beinhalten die Verunreinigungen oft die gleichen Stoffgruppen wie die Reinigungs- oder Hilfsstoffe, beispielsweise Phosphat, so dass eine einfache Bestimmung über einen Summenparameter nicht anwendbar ist. Beispielhaft sei die Lauge von Flaschenreinigungsmaschinen erwähnt, in der Phosphate aus Cola-Mix-Getränken gelöst sein können. Eine Additivbestimmung ist hier sinnvoll nicht durchführbar.

Eine weitere Belastung der Reinigungs- und/oder Desinfektionslösung besteht in eingetragenen nichtlöslichen Bestandteilen. Diese Lösung streut durch diese Bestandteile zunächst das Licht (Tyndall-Effekt) und wird bald darauf völlig undurchsichtig. Eine Bestimmungsmethode durch Licht-Reflektion, -Transmission oder -Absorption, wie sie z.B. in der EP 0 320 086 B2 beschrieben ist, kann daher für das bestimmungsgemäße Verfahren nicht eingesetzt werden.

Eine Optimierung des Nutzfluids sowohl hinsichtlich seiner Wirkung wie auch hinsichtlich seines wirtschaftlichen Einsatzes, ist nicht möglich, vor allem, wenn dieses Nutzfluid nach der Nutzung wiederverwendet werden soll.

Die genannten, bislang zur Konzentrationsermittlung eingesetzten chemischen A-nalyseverfahren werden aufgrund ihrer erheblichen Kosten insbesondere beim Einsatz des Nutzfluids in kleinerem Umfang häufig unterlassen.

Daraus ergeben sich insoweit anwendungstechnische und betriebswirtschaftliche Nachteile, als eine zu geringe Konzentration des zugegebenen Stoffes vorliegen kann, wodurch die Wirkung des Nutzfluids eingeschränkt ist, oder eine zu hohe Konzentration mit der Folge einer Verteuerung des Nutzfluids aufgrund der höheren Beschaffungskosten des zugesetzten Stoffes gegenüber dem Trägerfluid. Prinzipiell ist eine dauerhaft genaue Dosierung des eingebrachten bzw. wirksamen Stoffes rein zufällig.

Im Übrigen können als Trägerfluid Flüssigkeiten unterschiedlicher Viskosität oder Pasten zum Einsatz kommen, während der zuzusetzende Stoff in flüssiger, pastöser oder pulvriger Form vorliegen kann.

Der Erfindung liegt die Aufgabe zugrunde, ein Verfahren der gattungsgemäßen Art so weiterzuentwickeln, dass ein effektiverer und somit wirtschaftlicherer Einsatz des Nutzfluidums möglich ist.

Diese Aufgabe wird durch ein Verfahren mit den Merkmalen des Anspruchs 1 gelöst.

Mit Hilfe dieses Verfahrens ist es nun möglich, zu jedem Zeitpunkt, insbesondere während und/oder nach der Nutzung des Nutzfluids ohne großen Aufwand die Konzentration des vorliegenden im Trägerfluid gelösten Stoffes zu bestimmen und zu erkennen, ob eine ausreichende Menge an Stoff gelöst ist oder ob zur Wiederverwendung ggf. weiterer Stoff zugefügt werden muss, um die volle Nutzfähigkeit des Nutzfluids zu erhalten.

Nach einer vorteilhaften Weiterbildung der Erfindung erfolgt die quantitative Bestimmung des Stoffes oder, bei Zuführung mehrerer Stoffe, des Stoffgemisches, mittels der an sich bekannten Fluoreszenz-Spektroskopie, bei der als Tracerfarbstoff ein fluoreszierender Farbstoff dem Stoff zugegeben wird, der bei Anregung mit Licht einer definierten Wellenlänge Licht einer zweiten Wellenlänge emittiert, wobei mittels der genannten Fluoreszenz-Spektroskopie die emittierte Fluoreszenz ermittelt und über eine Konzentrationsbestimmung ausgewertet wird. Dabei ist die Menge des dem Stoff beigefügten Tracerfarbstoffs natürlich vorbestimmt.

Bei dem dem Trägerfluidum zugefügtem Stoffgemisch wird jeder Stoff des Stoffgemisches mit einer bestimmten Menge eines Tracerfarbstoffs beaufschlagt, die jedoch insoweit unterschiedlich sind, als deren Anregungs- und/oder Emissionswellenlängen genügend weit auseinander liegen, so dass problemlos eine Simultanbestimmung der Konzentration der einzelnen Stoffe des Stoffgemisches im Nutzfluidum möglich ist.

Zur Konzentrationsbestimmung kann beispielsweise eine Vorrichtung eingesetzt werden, wie sie aus der WO 02/079 738 A2 bekannt ist. Mittels der darin beschriebenen Vorrichtung ist eine Analyse des jeweiligen Nutzfluidums direkt vor Ort möglich, ohne dass es hierzu besonderer aufwendiger Vorkehrungen bedarf.

Gegenüber dem Stand der Technik bietet das neue Verfahren erhebliche, insbesondere wirtschaftliche Vorteile, wobei dieses Verfahren auch in einem automatischen Ablauf eingesetzt werden kann. Das heißt, je nach Ergebnis der Konzentrationsmessung kann in einem automatisierten Ablauf der entsprechende, mit dem Tracerfarbstoff in bestimmter Menge versetzte Stoff dem Fluid zugefügt werden.

Prinzipiell ist durch die Erfindung eine effektive Vor-Ort-Analyse möglich. Dabei sind die notwendigen Arbeitsschritte:
1. Bei vorhandenen Trübungen Verdünnen des Nutzfluids um einen vorgegebenen Faktor,
2. Messung vorzugsweise der Fluoreszenz der Lösung bei einer definierten Anregungswellenlänge und einer vorgegebenen Emissionswellenlänge,
3. Bestimmung der Konzentration anhand der Emissionsintensität.

Dabei erlaubt die hohe Empfindlichkeit des Verfahrens eine Nachweisgrenze im ppb-Bereich.

## Patentansprüche

1. Verfahren zur Bestimmung der Konzentration von in einem Nutzfluidum gelösten Reinigungs- und/oder Desinfektions- und/oder Hilfsstoffen, die in einem in der Lebensmittel- oder Getränkeverarbeitung eingesetzten Nutzfluidum gelöst sind, **dadurch gekennzeichnet, dass** dem Stoff vor dem Einbringen in das Fluidum zumindest ein Tracerfarbstoff zugegeben wird, dessen Konzentration während und/oder nach der Nutzung des Nutzfluids ermittelt und ausgewertet wird.

2. Verfahren nach Anspruch 1, **dadurch gekennzeichnet, dass** der Tracerfarbstoff in einer vorbestimmten Menge zugegeben wird.

3. Verfahren nach Anspruch 1 oder 2, **dadurch gekennzeichnet, dass** als Tracerfarbstoff ein fluoreszierender Farbstoff eingesetzt wird.

4. Verfahren nach einem der vorhergehenden Ansprüche, **dadurch gekennzeichnet, dass** bei Einsatz eines Stoffgemisches jedem der das Stoffgemisch bildenden Stoffe ein hinsichtlich seiner Wellenlänge unterschiedlich emittierender fluoreszierender Farbstoff beigegeben wird.

5. Verfahren nach einem der vorhergehenden Ansprüche, **dadurch gekennzeichnet, dass** die ermittelte Konzentration des Tracerfarbstoffs mit einem Sollwert verglichen wird.

6. Verfahren nach einem der vorhergehenden Ansprüche, **dadurch gekennzeichnet, dass** bei Abweichung der Konzentration vom Sollwert im Sinne einer Abnahme eine entsprechende Menge des Stoffes dem Fluidum zugegeben wird.

7. Verfahren nach einem der vorhergehenden Ansprüche, **dadurch gekennzeichnet, dass** dies in einem automatisierten Betriebsablauf durchgeführt wird.
